Europäisches Patentamt

European Patent Office

Office européen des brevets

(11) Veröffentlichungsnummer: **0 250 641**
**B1**

# EUROPÄISCHE PATENTSCHRIFT

(45) Veröffentlichungstag der Patentschrift:
**27.12.89**

(21) Anmeldenummer: **86115202.3**

(22) Anmeldetag: **03.11.86**

(51) Int. Cl.⁴: **F16J 15/32**

(54) **Verfahren zur Herstellung eines Dichtringes mit einer Dichtlippe.**

(30) Priorität: **25.06.86 DE 3621241**

(43) Veröffentlichungstag der Anmeldung:
**07.01.88 Patentblatt 88/1**

(45) Bekanntmachung des Hinweises auf die Patenterteilung:
**27.12.89 Patentblatt 89/52**

(84) Benannte Vertragsstaaten:
**AT BE CH DE FR GB IT LI NL SE**

(56) Entgegenhaltungen:
**DE-C- 1 153 578**
**DE-C- 3 246 152**

(73) Patentinhaber: **Firma Carl Freudenberg, Höhnerweg 4,
D-6940 Weinheim/Bergstrasse(DE)**

(72) Erfinder: **Graf, Günter, Dr., Grundelbachstrasse 112 c,
D-6940 Weinheim(DE)**
Erfinder: **Gross, Heinz, Schulstrasse 12,
D-6943 Birkenau(DE)**
Erfinder: **Sponagel, Stefan, Dr. rer. nat., Bannelsberg 26,
D-6149 Rimbach(DE)**

(74) Vertreter: **Weissenfeld-Richters, Helga, Dr.,
Höhnerweg 2, D-6940 Weinheim/Bergstrasse(DE)**

**Beschreibung**

Die Erfindung betrifft ein Verfahren zur Herstellung eines Dichtringes mit einer Dichtlippe, bei dem der die Dichtlippe bildende Werkstoff in plastisch verformbarem Zustand in die Gestalt eines Hohlkörpers überführt und vor oder während seiner Verfestigung im Bereich der dynamisch abdichtenden Zone der fertigen Dichtlippe mit hydrodynamisch wirkenden Rückförderelementen für Leckflüssigkeit versehen wird, bei dem der Werkstoff verfestigt und die erhaltene Dichtlippe außerhalb des genannten Bereiches in seinem Durchmesser aufgeweitet und in einem Gehäuse festgelegt wird.

Ein solches Verfahren ist aus der DE-C 3 246 152 bekannt. Die Dichtlippe wird dabei im Anschluß an ihre Herstellung durch einen prägenden oder schneidenden Bearbeitungsvorgang mit hydrodynamisch wirkenden Rückförderelementen versehen. Diese müssen, um ihrem Zweck gerecht zu werden, die Gestalt einer wendelförmigen Nute haben. Die Anbringung ist dementsprechend äußerst kompliziert.

Der Erfindung liegt die Aufgabe zugrunde, ein vereinfachtes Verfahren zur Herstellung eines Dichtringes zu zeigen, bei dem die Dichtlippe mit hydrodynamisch wirkenden Rückförderelementen versehen ist.

Diese Aufgabe wird erfindungsgemäß bei einem Verfahren der eingangs genannten Art dadurch gelöst, daß der Hohlkörper säulenförmig erzeugt und zur Bildung der hydrodynamisch wirkenden Rückförderelemente vor seiner Verfestigung zwischen einen axialen Abstand aufweisenden Querschnittsebenen relativ verdreht wird.

Bei dem erfindungsgemäßen Verfahren wird somit in einem ersten Arbeitsschritt aus dem verwendeten, plastisch formbaren, polymeren Werkstoff ein säulenförmiger Hohlkörper gebildet, dessen Wandungen sich in allen Teilbereichen in einer achsparallelen Lage befinden. Dieser somit vorliegende, plastisch formbare Hohlkörper wird anschließend in einen axialen Abstand voneinander aufweisenden Querschnittsebenen um seine Achse verdreht und verfestigt, wodurch sich eine bleibende, schräg zur Austrittsrichtung erstreckende Fältelung des Hohlkörpers ergibt. Die Ausprägung der Fältelung ist abhängig von der Intensität der vorausgegangenen Verdrehung. Ausgezeichnete Abdichtungsergebnisse werden bereits dann erzielt, wenn der Verdrehwinkel zwischen 5 und 15° beträgt.

Es ist grundsätzlich ausreichend, wenn eine entsprechende Fältelung nur in dem axialen Bereich des säulenförmigen Hohlkörpers vorgenommen wird, in dem dieser innerhalb des fertigen Dichtringes den Dichtspalt begrenzt. Eine die gesamte axiale Erstreckung des säulenförmigen Hohlkörpers in sich einbeziehende Fältelung ist jedoch ebenfalls möglich und kann an einem beliebig lang ausgebildeten Hohlkörper vorgenommen werden, von dem die einzelnen Dichtlippen vor oder während ihrer Festlegung in dem aufnehmenden Gehäuse abgestochen werden. Eine geeignete Festlegungsmethode wird beispielsweise in der DE-C 3 246 152 beschrieben. Sie eignet sich in Verbindung mit dem vorstehend beschriebenen Verfahren insbesondere für eine Anwendung des erfindungsgemäßen Verfahrens in der Massenproduktion von Dichtringen.

Der Hohlkörper kann unter Verwendung einer Ringdüse erzeugt und unmittelbar anschließend in dem erforderlichen Maße in sich selbst verdreht werden.

Eine entsprechende Vorgehensweise erübrigt die erneute Überführung des den Hohlkörper bildenden Werkstoffes in einen plastisch formbaren Zustand und empfiehlt sich vor allem in Fällen, in denen ein in der Wärme vernetzbarer Dichtungswerkstoff zur Anwendung gelangt.

Der Hohlkörper kann bei einer solchen Vorgehensweise auch beim Austreten aus der Ringdüse innenseitig mit sich in axialer Richtung erstreckenden Rippen und/oder Nuten versehen werden. Diese erfahren durch die nach dem Austreten aus der Ringdüse vorgenommene Verdrehung des Hohlkörpers in sich selbst eine Veränderung ihrer Zuordnung zu der axialen Richtung, und schließen mit derselben anschließend einen spitzen Winkel ein. Gegenüber einer Ausführung, bei der der eingesetzte Hohlkörper vor seiner Verdrehung innenseitig durch eine glatte Zylinderfläche begrenzt ist, ergibt sich hierdurch eine deutliche Verstärkung der auf Leckflüssigkeit bei einer bestimmungsgemäßen Verwendung des erhaltenen Dichtringes ausgeübten Rückförderwirkung.

Ein ähnlicher Effekt läßt sich erzielen, wenn der aus der Ringdüse ausgestoßene, in einem plastisch formbaren Zustand befindlichen Werkstoff zuvor mit einem gleichmäßig verteilten Gehalt an Kurzfasern versehen worden ist. Diese werden während des Auftretens des Werkstoffes aus der Ringdüse aufgrund der sich hier ergebenden Geschwindigkeitserhöhung in eine parallele Lage untereinander und zu dem Hohlkörper gebracht, welche durch die anschließende Verdrehung des erhaltenen, noch plastisch formbaren Hohlkörpers eine gleichgerichtete Modifizierung im Sinne der vorstehenden Ausführungen erfährt. Besonders gute Eigenschaften werden erhalten, wenn die eingemischten Kurzfasern von größerer Härte sind als der sie nach der Fertigungstellung des Dichtringes umschliessende, polymere Dichtungswerkstoff. Unter Verwendung von Kurzfasern, die weicher sind als der genannte Werkstoffkörper lassen sich jedoch ebenfalls ausgezeichnete Eigenschaften erzielen. Bevorzugte Faserarten bestehen bei einer Länge von 1 bis 3 mm aus Polyester und/oder Polyamid.

Die Durchführung des erfindungsgemäßen Verfahrens wird nachfolgend anhand der als Anlage beigefügten Zeichnung nochmals erläutert. Es zeigen:

Figur 1 die Erzeugung des säulenförmigen Hohlkörpers 1 unter Verwendung einer kreisringförmig in sich geschlossenen Schlitzdüse eines Extruders, unmittelbar anschließender Verdrehung des Hohlkörpers zwischen einen axialen Abstand L aufweisenden Querschnittsebenen in noch plastisch formbarem Zustand und anschließender Verfestigung,

Figur 2 das Einsetzen des nunmehr verfestigten, in sich verdrehten, säulenförmigen Hohlkörpers 1 in das zu seiner Festlegung in dem aufnehmenden Gehäuse verwendete Montagewerkzeug,

Figur 3 das in Figur 2 gezeigte Montagewerkzeug nach Ende der Schließbewegung mit noch im Inneren befindlichem fertiggestelltem Dichtring.

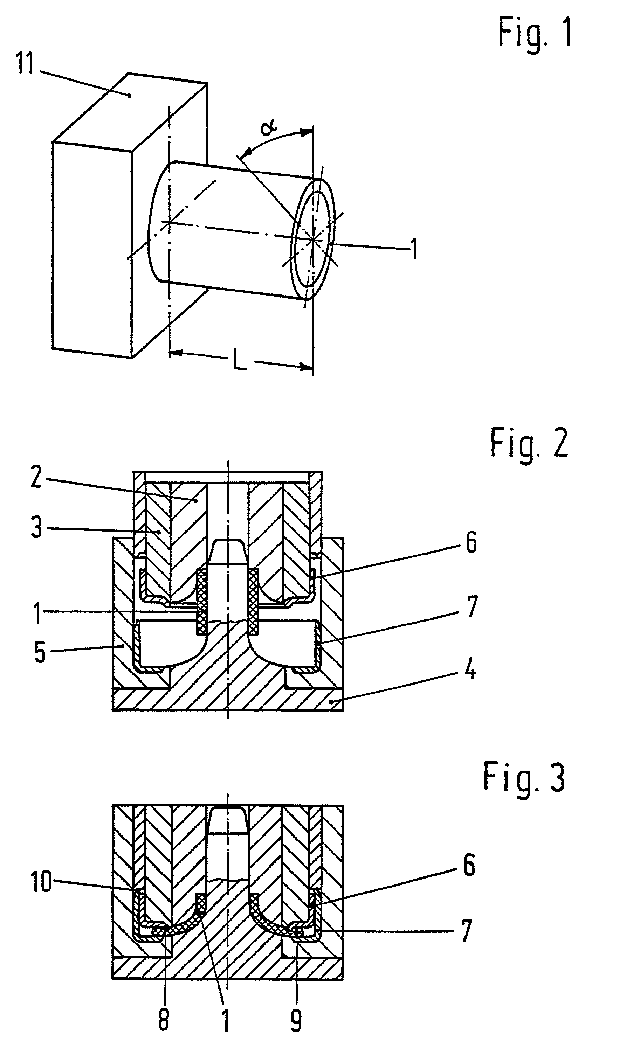

Die in Figur 1 gezeigte Schlitzdüse 11 ist an dem Spritzkopf eines nicht dargestellten Extruders angeordnet.

Ihre Austrittsöffnung ist kreisringförmig ausgebildet und innen- und außenseitig glattflächig begrenzt.

Zur Verarbeitung gelangt ein üblicher Dichtungswerkstoff, der in der Schlitzdüse in die Gestalt eines innen- und außenseitig glattflächigen Hohlzylinders überführt wird.

Der Hohlzylinder verläßt die Schlitzdüse ohne jede in Umfangsrichtung orientierte Relativbewegung in einem noch plastisch formbaren Zustand und wird unmittelbar anschliessend und vor seiner Verfestigung in sich selbst verdreht.

Hierdurch ergibt sich eine reliefartige Strukturierung der Innen- und der Außenseite in Gestalt von parallel zueinander verlaufenden, feinen Falten, die mit der Achse des Hohlzylinders einen spitzen Winkel einschließen. Der Verdrehungswinkel alpha kann 11° bei einer Länge des ringförmigen Körpers von 16 mm betragen.

Der anschließend erhaltene, verfestigte Hohlkörper von säulenförmiger Gestalt wird in der in Figur 2 gezeigten Weise in ein Montagewerkzeug eingesetzt. Dieses besteht aus dem Werkzeugoberteil 2 mit dem taktabhängig vorschiebbaren Schließer 3 und dem Werkzeugunterteil 4 mit dem unabhängig davon beweglichen Auswerfer 5. Der Schließer nimmt relativ zu dem Werkzeugoberteil eine rückverlagerte Position ein und trägt den lose aufgesteckten Innenring 6 des aufnehmenden Gehäuses. In den Auswerfer ist der zugehörige Versteifungsring 7 des Gehäuses eingelegt. Das Montagewerkzeug ist damit fertig vorbereitet für die Umformung des säulenförmigen Hohlzylinders 1 und dessen gegenseitige Verbindung mit dem Innenring 6 und dem Versteifungsring 7 des aus Stahlblech bestehenden Gehäuses.

Der diesbezügliche Arbeitsschritt wird durch eine koaxiale Gegeneinanderbewegung des Werkzeugoberteiles gegen das Werkzeugunterteil 4 eingeleitet. Der säulenförmige Hohlzylinder 1 erfährt dadurch eine allmähliche, trompetenartige Aufweitung seines unteren Bereiches, die ihren Abschluß findet in der Ausbildung eines zwischen den radial nach innen weisenden Schenkeln des Innenringes 6 und des Versteifungsringes 7 angeordneten Flansches 9. Im nächstfolgenden Arbeitsschritt folgt der Schließer 3 der vorausgegangenen Bewegung des Werkzeugoberteiles 2, wodurch der mit einem umlaufenden Wulst versehene Innenring 6 in axialer Richtung an den Flansch 9 angepreßt wird.

Eine mechanisch stabile und flüssigkeitsdichte Festlegung des Flansches in dem Gehäuse ist hiervon die Folge.

Die gegenseitige Zuordnung erfährt eine dauerhafte Stabilisierung durch das gleichzeitige oder nachfolgende Umbördeln des axial über den Innenring 6 überstehenden Endes des Versteifungsringes 7, wie in Figur 3 gezeigt. Das Werkzeug kann danach geöffnet werden, der Wellendichtring kann entnommen und seiner bestimmungsgemäßen Verwendung geführt werden. Er weist im Bereich der Innenseite eine mikroskopisch feine, mit bloßem Auge nicht ohne weiteres erkennbare Fältelung auf, die mit der axialen Richtung einen spitzen Winkel einschließt. Ein vollkommen leckagefreier Lauf und eine deutlich vergrößerte Gebrauchsdauer in bezug auf Ausführungen, bei denen die hydrodynamisch wirkenden Rückförderelemente spanabhebend oder durch eine senkrechte Verpressung der Oberfläche der Dichtlippe mit einem Prägewerkzeug erzeugt worden sind, treten deutlich in Erscheinung.

**Patentansprüche**

1. Verfahren zur Herstellung eines Dichtringes mit einer Dichtlippe, bei dem der die Dichtlippe bildende Werkstoff in plastisch verformbarem Zustand in die Gestalt eines Hohlkörpers (1) überführt und vor oder während seiner Verfestigung im Bereich der dynamisch abdichtenden Zone der fertigen Dichtlippe mit hydrodynamisch wirkenden Rückförderelementen für Leckflüssigkeit versehen wird, bei dem der Werkstoff verfestigt und die erhaltene Dichtlippe axial außerhalb des genannten Bereiches in seinem Durchmesser aufgeweitet und in einem Gehäuse festgelegt wird, dadurch gekennzeichnet, daß der Hohlkörper (1) säulenförmig erzeugt und zur Bildung der hydrodynamisch wirkenden Rückförderelemente vor seiner Verfestigung zwischen einen axialen Abstand aufweisenden Querschnittsebenen relativ verdreht wird.

2. Verfahren nach Anspruch 1, dadurch gekennzeichnet, daß der Hohlkörper (1) unter Verwendung einer Ringdüse (11) erzeugt und relativ zu der sich bei dem Austreten des Werkstoffes ergebenden Querschnittsebene um seine Achse verdreht wird.

3. Verfahren nach Anspruch 2, dadurch gekennzeichnet, daß der Hohlkörper (1) beim Austreten aus der Ringdüse (11) innenseitig mit sich in axialer Richtung erstreckenden Rippen und/oder Nuten versehen wird.

4. Verfahren nach Anspruch 2 bis 3, dadurch gekennzeichnet, daß der Hohlkörper (1) unter Verwendung eines Kurzfasern enthaltenden Werkstoffes erzeugt wird und daß die Kurzfasern in der Ringdüse überwiegend in eine zu dem Hohlkörper (1) parallele Lage gebracht werden.

**Claims**

1. A method of manufacturing a sealing ring with a sealing lip, in which the material forming the sealing lip is converted in the plastically deformable state into the form of a hollow body (1) and, prior to or during its solidification, is provided in the region of the dynamically sealing zone of the finished sealing lip with hydrodynamically acting return elements for leakage fluid, in which the material is solidified and the sealing lip obtained is widened in its diameter axially outside the said region and fixed in a housing, characterised in that the hollow body (1) is produced in a column shape and in order to form the hydrodynamically acting return elements is subjected prior to its solidification to relative twisting between cross-sectional planes having an axial spacing.

2. A method according to claim 1, characterized in that the hollow body (1) is produced using an annular die (11) and is twisted about its axis relative to the crosssectional plane produced as the material emerges.

3. A method according to claim 2, characterised in that, as it emerges from the annular die (11), the hollow body (1) is provided on the inside with ribs and/or grooves extending in the axial direction.

4. A method according to any of claims 2 to 3, characterised in that the hollow body (1) is produced using a material containing chopped fibres and in that in the annular die the chopped fibres are brought predominantly into a position parallel to the hollow body (1).

## Revendications

1. Procédé pour la fabrication d'une bague d'étanchéité avec une lèvre d'étanchéité, dans lequel le matériau constituant la lèvre d'étanchéité est transformé en un corps creux (1) alors qu'il est à l'état plastiquement déformable et est pourvu d'éléments de renvoi à action hydrodynamique pour le liquide des fuites avant ou pendant sa solidification dans la zone d'étanchéité dynamique de la lèvre d'étanchéité terminée, dans lequel le matériau est durci et la lèvre d'étanchéité obtenue subit un élargissement de son diamètre dans le sens axial, en dehors de la zone précitée et et est fixée à un logement, caractérisé en ce que le corps creux (1) est réalisé en forme de colonne et subit une rotation relative entre deux plans de coupe présentant une distance axiale avant son durcissemment et afin de former des éléments de renvoi à action hydrodynamique.

2. Procédé selon la revendication 1, caractérisé en ce que le corps creux (1) est fabriqué en utilisant une busette annulaire (11) et subit une rotation autour de son axe par rapport à des plans de coupe qui apparaissent au moment de la sortie du matériau.

3. Procédé selon la revendication 2, caractérisé en ce que le corps creux (1) est pourvu intérieurement de nervures et/ou de rainures s'étendant en direction axiale au moment où celui-ci sort de la busette annulaire (11).

4. Procédé selon les revendications 2 et 3, caractérisé en ce que le corps creux (1) est fabriqué en utilisant un matériau contenant des fibres courtes et en ce que les fibres courtes sont introduites dans la busette annulaire essentiellement avec une position parallèle au corps creux (1).

Fig. 1

Fig. 2

Fig. 3